Europäisches Patentamt

(19) European Patent Office

Office européen des brevets

(11) Veröffentlichungsnummer: **0 096 056**
**B1**

(12) **EUROPÄISCHE PATENTSCHRIFT**

(45) Veröffentlichungstag der Patentschrift:
04.09.85

(51) Int. Cl.⁴: **F 24 J 2/44**

(21) Anmeldenummer: **82903576.5**

(22) Anmeldetag: **27.11.82**

(86) Internationale Anmeldenummer:
**PCT/DE 82/00224**

(87) Internationale Veröffentlichungsnummer:
**WO 83/02149 (23.06.83 Gazette 83/15)**

(54) **EINRICHTUNG ZUM SOLAREN ERWÄRMEN EINER FLÜSSIGKEIT.**

(30) Priorität: **15.12.81 DE 3149607**

(43) Veröffentlichungstag der Anmeldung:
**21.12.83 Patentblatt 83/51**

(45) Bekanntmachung des Hinweises auf die Patenterteilung:
**04.09.85 Patentblatt 85/36**

(84) Benannte Vertragsstaaten:
**AT CH DE FR LI NL**

(56) Entgegenhaltungen:
**CH - A - 624 208**
**DE - A - 2 604 361**
**DE - A - 2 727 176**
**US - A - 4 290 417**

(73) Patentinhaber: **Boettcher, Alfred, Prof. Dr.,**
**Hangstrasse 11, D-5100 Aachen (DE)**

(72) Erfinder: **Boettcher, Alfred, Prof. Dr., Hangstrasse 11,**
**D-5100 Aachen (DE)**

(74) Vertreter: **von Creytz, Dietrich, Tannenweg 25,**
**D-5144 Wegberg-Beeck (DE)**

## Beschreibung

Die Erfindung betrifft eine Einrichtung zum soren Erwärmen einer Flüssigkeit mit einem Solarkollektor und Flüssigkeitstransport durch naturkonvektion mit einer jenseits des Solarkollektors in der Ableitung der solar erwärmten Flüssigkeit liegenden Überlaufstrecke. Der Begriff „Solarkollektor" umfasst hier und im folgenden sowohl den Einzelkollektor als auch ein Kollektorsystem.

Heute übliche Anlagen dieser Art bestehen aus einem Flüssigkeitsvolumen in einem thermisch isolierten Behälter, das mit dem Solarkollektor bzw. Kollektorsystem direkt oder durch einen geschlossenen Kreislauf indirekt verbunden ist. Der Transport einer im Kollektor erwärmten Flüssigkeit in den Behälter erfolgt entweder mit Hilfe einer Pumpe oder durch Thermosyphonwirkung. In beiden Fällen sind wesentliche Nachteile in Kauf zu nehmen:

a) Die Verwendung von Pumpen ist unmöglich in Gegenden ohne elektrische Energieversorgung und aufwendig, zumal diese Geräte einer automatisch arbeitenden regulierung bedürfen, welche in Zeiten geringer oder fehlender Sonneneinstrahlung das Pumpen warmer Flüssigkeit aus dem Behälter in die Kollektoren verhindert, da die Flüssigkeit andernfalls abgekühlt statt erwärmt würde.

b) Thermosyphon-Strömungen können in Zeiten unzureichender Sonneneinstrahlung ihre Richtung umkehren und dadurch ebenfalls zur Abkühlung bereits erwärmter Flüssigkeit führen. Ausserdem ist es bei Einrichtungen mit Flüssigkeitstransport durch Thermosyphonwirkung ästhetisch nachteilig, dass die mit der solar erwärmten Flüssigkeit zu füllenden Behälter räumlich oberhalb der Kollektoren anzuordnen sind.

c) Bei bekannten Einrichtungen wird die geforderte Solltemperatur der solar erwärmten Flüssigkeit auch in deren oberen Schicht im Behälter erst nach längerer Einstrahlungszeit, insbesondere bei intermittierender Einstrahlung, erreicht.

In der DE-A Nr. 2604361 wird ein Flüssigkeitskreislaufsystem mit Speicher zur Wärmegewinnung aus Sonneneinstrahlung beschrieben. Die bekannte Einrichtung ist so konstruiert, dass bei Wärmeangebot im Solarkollektor die erwärmte Flüssigkeit selbsttätig einem Flüssigkeitsspeicher zugeführt wird. Es soll eine Naturkonvektion vom Kollektor zum Wasserbehälter erzeugt und zugleich eine Umkehrung der Strömung vermieden werden. Um das zu erreichen, wird der Einlauf der erwärmten Flüssigkeit in den Speicher etwas unterhalb des dortigen Flüssigkeitsspiegels in Höhe oder etwas oberhalb des oberen Endes des Solarkollektors vorgesehen; ausserdem wird ein biegsamer Schlauch, der durch einen Schwimmer eine kleine Distanz über dem Flüssigkeitsspiegel dem Speicher zu halten ist, als Rücklaufsperre an den Einlauf angeschlossen. Diese Konstruktion bietet zwar Sicherheit gegen einen Rückfluss aus dem Speicher bei Abkühlung im Kollektorbereich, lässt aber die Erzeugung von aufgeheizter Flüssigkeit vorgegebener Temperatur praktisch nicht zu, da der Abstand des Überlaufniveaus zum Flüssigkeitsniveau im Speicher und damit der Temperaturunterschied der Flüssigkeitssäulen in Kollektor und Speicher für alle Temperaturen praktisch konstant bleibt. Beispielsweise werden als Höhendifferenz im Überlaufbereich 0,5 bis 1 mm bei einer Kollektorhöhe von 3 m angegeben. Das bedeutet, dass der Überlauf bei einer Differenz der mittleren Temperaturen in Speicher und Kollektor von nur rund 0,8 bis 1,7° C eintritt. Die bekannte Einrichtung arbeitet daher schon als Einkreisanlage sehr träge. Aus wirtschaftlichen Gründen kommt demnach ein Einsatz als Zweikreisanlage wegen der noch grösseren Trägheit nicht in Frage.

Der Erfindung liegt die Aufgabe zugrunde, eine Einrichtung eingangs genannter Art so zu verbessern, dass sie bei Betrieb in kurzer Zeit eine Flüssigkeit der vorgesehenen Endtemperatur bzw. einer festen Solltemperatur zu liefern in der Lage ist. Die erfindungsgemässe Lösung besteht darin, dass bei gleichem Ausgangsniveau der Flüssigkeit in dem Solarkreis und in einer ausserhalb des Kollektors stehenden, durch den Zulauf der durch den Kollektor zu erwärmenden Flüssigkeit hindurch kommunizierenden Flüssigkeitssäule das Überlaufniveau der Überlaufstrecke um einen vorzugebenden Abstand von 0,5 bis 10 cm über dem Niveau der Flüssigkeitssäule räumlich fest angeordnet ist.

Erfindungsgemäss wird von dem bekannten Prinzip kommunizierender Röhren Gebrauch gemacht: Die im Kollektorsystem stehende Flüssigkeitssäule ist durch eine auf der Austrittsseite der erwärmten Flüssigkeit nachgeschaltete Überlaufstrecke von dem Flüssigkeitsniveau im nachgeschalteten Speicherbehälter, in welchem in üblicher Weise ein näherungsweise konstantes Flüssigkeitsniveau gehalten wird, getrennt. Der Flüssigkeitszulauf am unteren Ende des Solarkollektors bzw. Kollektorsystems kann dabei vom unteren Ende des Warmwasserbehälters oder von einem gesonderten Flüssigkeitsbehälter mit auf dem erforderlichen Niveau gehaltenem Flüssigkeitsspiegel aus erfolgen.

Da die Temperatur der zum Behälter fliessenden Flüssigkeit durch den Abstand des Niveaus der Überlaufstrecke über dem Niveau der Flüssigkeit im Behälter bestimmt ist, wird durch den erfindungsgemässen Niveauabstand erreicht, dass die in den Behälter fliessende Flüssigkeit unabhängig von der jeweiligen Temperatur bereits auf die gewünschte Solltemperatur einzustellen ist. Die Temperatur der zulaufenden Flüssigkeit kann daher überraschend unabhängig von der Temperatur der bereits im Behälter befindlichen Flüssigkeit fest vorgegeben werden. Überraschend hängt daher in der erfindungsgemässen Einrichtung nur die Menge, nicht aber die Temperatur der gelieferten heissen Flüssigkeit von der Höhe der Einstrahlung, der Kollektorfläche und dem Kollektorwirkungsgrad ab.

Anhand der schematischen Darstellung von Ausführungsbeispielen werden weitere Einzelheiten der Erfindung erläutert. Es zeigen:

Fig. 1 eine Einrichtung zum solaren Erwärmen einer Flüssigkeit mit einem von der Flüssigkeit im Kreislauf durchströmtem Warmwasserbehälter;

Fig. 2 eine Einrichtung nach Fig. 1 jedoch mit getrenntem Speicher für die aus dem Kollektor kommende erwärmte Flüssigkeit, und

Fig. 3 eine Einrichtung entsprechend Fig. 1 mit einem von der erwärmten Flüssigkeit zu durchströmenden Wärmetauscher in dem Warmwasserbehälter.

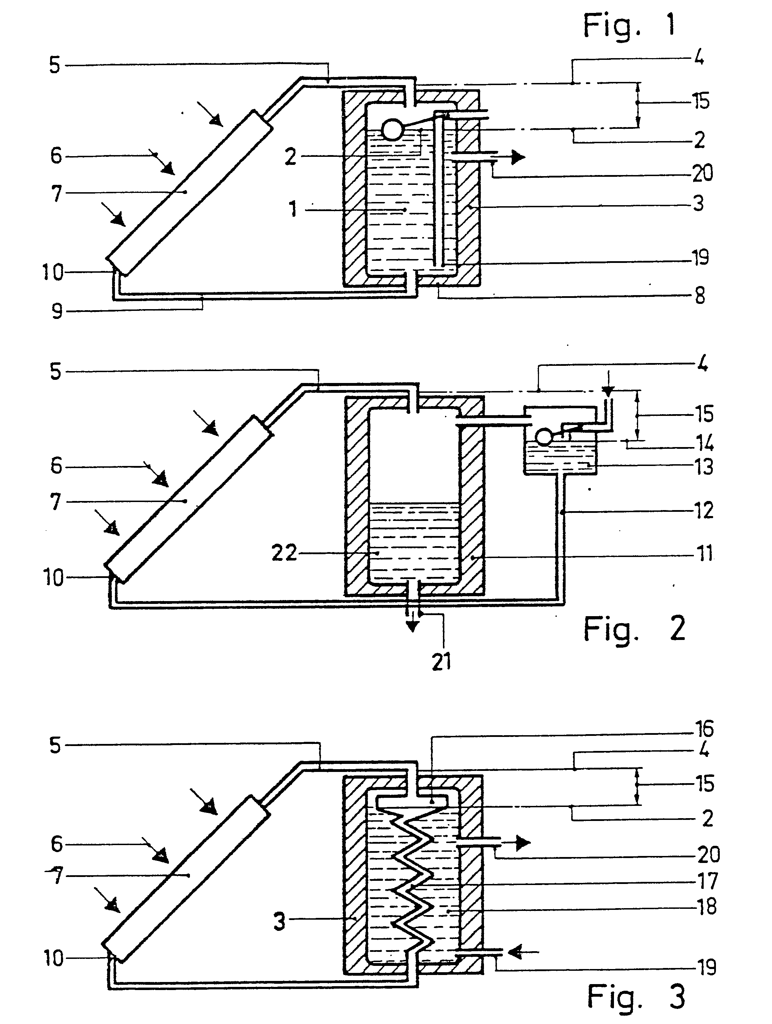

Im Falle einer direkten Erhitzung der Flüssigkeit 1 gemäss Fig. 1 liegt deren Niveau 2 im Behälter 3 unterhalb des Niveaus 4 der Überlaufstrecke 5. Bei frisch gefülltem Behälter 3 wird vor Beginn der solaren Einstrahlung 6 am Solarkollektor 7 das Niveau 2 der Flüssigkeit 1 im Kollektor 7 und im Behälter 3 gleich hoch sein. Befindet sich im Behälter 3 warme Flüssigkeit 1 und fällt keine Sonnenstrahlung 6 auf den Kollektor 7, wird die im Kollektor 7 stehende Flüssigkeit bei entsprechenden Aussentemperaturen abkühlen und eine niedrigere Temperatur als diejenige im Behälter 3 und damit eine hohere Dichte haben. Dadurch wird das Flüssigkeitsniveau im Kollektor 7 etwas niedriger liegen als im Behälter 3. In keinem der beiden Fälle findet eine nennenswerte Strömung von einer zur anderen Flüssigkeitssäule statt.

Sobald jedoch Sonnenstrahlung 6 auf den Kollektor 7 trifft, wird die auf der Kollektorseite stehende Flüssigkeit laufend erwärmt, wodurch ihre Dichte abnimmt. Damit steigt das Flüssigkeitsniveau auf der Kollektorseite, bis es das Niveau 4 der Überlaufstrecke 5 erreicht. Von diesem Augenblick an fliesst bei fortlaufender Einstrahlung laufend warme Flüssigkeit durch die Überlaufstrecke 5 in den Behälter 3 und gleichzeitig kältere Flüssigkeit vom Boden 8 des Behälters 3 über eine Rohrleitung 9 in den unteren Einlauf 10 des Kollektors 7. Die Temperatur der zum Behälter 3 fliessenden Flüssigkeit wird durch den Abstand des Niveaus 4 der Überlaufstrecke 5 von dem Niveau 2 der Flüssigkeit 1 im Behälter 3 sowie durch Stoffkonstanten der Flüssigkeit bestimmt.

Bei spezifisch hoher Einstrahlung auf den jeweiligen Solarabsorber kann die in den Kollektoren 7 enthaltene Flüssigkeit, insbesondere bei Serienschaltung mehrere Kollektoren, zum Sieden kommen. In diesem Falle wird die Strömung vom Kollektor 7 zum Behälter 3 durch Dampfblasen beschleunigt, so dass nicht mehr die Höhe der Überlaufstrecke 5 sondern der Siedepunkt der Flüssigkeit die Temperatur der in den Behälter 3 überlaufenden Flüssigkeit bestimmt.

Wenn der Niveauabstand so eingestellt wird, dass in den Behälter 3 fliessende Flüssigkeit bereits die gewünschte Solltemperatur hat, kann wegen des geringen Volumens der strömenden Flüssigkeit durch Einbauten im Behälter eine gute Temperaturschichtung erreicht werden. Gemäss Fig. 2 wird eine Rückvermischung erwärmter und kalter Flüssigkeit völlig vermieden, wenn die aus dem Kollektor 7 austretende Flüssigkeit in einen abgetrennten, thermisch isolierten Behälter 11 fliesst und wenn der Nachlauf von Flüssigkeit zum Kollektor 7 aus einer von dem Behälter 11 getrennten Flüssigkeitssäule 12 mit Speicherbehälter 13 erfolgt und das Niveau 14 der getrennten Flüssigkeitssäule 12 ihrerseits konstant gehalten wird. Eine solche Anordnung bietet sich besonders zum solaren Erwärmen von Brauchwasser an, da auf diese Weise schon nach kurzen Einstrahlungsintervallen Brauchwasser der durch den Niveauabstand 15 vorgegebenen Solltemperatur zur Verfügung steht. Nur die Brauchwassermenge nicht aber seine Temperatur hängt von der Höhe der Einstrahlung, der Kollektorfläche und deren Wirkungsgrad ab.

Der Vorteil der Erfindung wird dann besonders gravierend, wenn Vakuum-Solarkollektoren eingesetzt werden. Bei intermittierender Einstrahlung, wie sie bei teilweiser Bewölkung häufig auftritt, enthält das Kollektorsystem Flüssigkeit dicht unter der zum Überlauf führenden Solltemperatur. Diese Isttemperatur stagniert so lange, bis die Einstrahlung wieder einsetzt. Die Wärmeverluste der Flüssigkeit sind bei Vakuum-Kollektoren aufgrund deren Konstruktionsprinzips besonders klein, so dass im strahlungsarmen Intervall Verluste kaum auftreten. Auch der für Vakuum-Kollektoren charakteristische, relativ gute Wirkungsgrad bei niedriger Einstrahlung kommt bei Anwendung im Rahmen der erfindungsgemässen Einrichtung voll zur Wirkung. Weiterhin wird wegen des für Vakuum-Kollektoren typische, geringen Flüssigkeitsinhalts pro Quadratmeter die Solltemperatur schon nach sehr kurzen Einstrahlungsintervallen erreicht. Dieser Vorteil wird bei Erhöhung der Flächendichte der Einstrahlung mit Hilfe von Spiegelboostern noch wesentlich verstärkt. Solche Booster führen auch dann zu einer optimalen Erhöhung der Kollektorleistung bei gleichzeitigem Verringern der spezifischen Investitionskosten, wenn sie einen Konzentrationsfaktor zwischen 1,5 und 4,5 haben und wenn auf ein kontinuierliches Nachführen verzichtet wird.

Fig. 3 zeigt die Anwendung des erfindungsgemässen Prinzips auf einer Anlage mit indirekter Flüssigkeitserwärmung durch einen die Wärme übertragenden geschlossenen Kreislauf. Auch bei diesem vorteilhaften Ausführungsbeispiel befindet sich im Bereich der Überlaufstrecke eine Gasblase 16, die den Niveauabstand 15 bestimmt und deren Volumen durch Gas- bzw. Flüssigkeitszu- und -ablaufventile (nicht gezeichnet) zu ändern ist. Bei Verwendung von Wasser im geschlossenen Kreislauf wird Luft als regulierendes Gasvolumen bevorzugt. Um den Niveauabstand 15 durch die Volumenausdehnung der Flüssigkeit bei steigenden Temperaturen nicht zu stark zu ändern, wird vorzugsweise ein Gaspuffervolumen als Gasblase 16 vom Kollektor 7 aus gesehen jenseits der Überlaufstrecke 5 eingebaut. Das erfindungsgemässe Prinzip, bei dem Flüssigkeit hoher Temperatur in den oberen Teil eines im Behälter 3 befindlichen Wärmetauschers 17 eintritt, führt dann zu einer besonders raschen Erwärmung eines Teils der im Behälter 3 befindlichen Nutzflüssigkeit 18 auf die angestrebte Endtemperatur, wenn im oberen Teil des Behälters spezifisch deutlich mehr Wärmetauscherfläche untergebracht wird als im unteren Teil.

Der Behälter 3 besitzt im Ausführungsbeispiel nach Fig. 3 im unteren Bereich einen Zulauf 19 und im oberen Bereich einen zum Verbraucher führenden Abfluss 20. In ähnlicher Weise werden Zufluss 19 und Abfluss 20 im Ausführungsbeispiel nach Fig. 1 angeordnet. Demgegenüber kann der zum Verbraucher führende Abfluss 21 im Ausführungsbeispiel nach Fig. 2 am unteren Ende des Behälters 11 angebracht werden, weil in diesem Fall die im Behälter befindliche Flüssigkeit 2 systembedingt im wesentlichen überall gleiche Temperatur aufweist.

Bei verschiedenen Ausführungsbeispielen kann der Niveauunterschied 15 zwischen Überlaufstrecke 5 und der den Kollektorzulauf liefernden äusseren Flüssigkeitssäule 1 bzw. 12 durch Variation der absoluten Höhe der Überlaufstrecke geändert werden. Eine Änderung erfolgt automatisch bei Erwärmung der Flüssigkeitssäule im Behälter oder im Wärmetauscherkreislauf.

Das erfindungsgemässe Prinzip ist sowohl bei Vakuum-Kollektoren mit direktem Flüssigkeitsdurchgang als auch bei Kollektoren mit Wärmeauskopplung durch ein Wärmerohr vorteilhaft.

## Patentansprüche

1. Einrichtung zum solaren Erwärmen einer Flüssigkeit (1) mit einem Solarkollektor (7) und Flüssigkeitstransport durch Naturkonvektion mit einer jenseits des Solarkollektors (7) in der Ableitung der solar erwärmten Flüssigkeit (1) liegenden Überlaufstrecke (5), dadurch gekennzeichnet, dass bei gleichem Ausgangsniveau der Flüssigkeit (1) in dem Solarkollektor (7) und in einer ausserhalb des Solarkollektors stehenden, durch den Zulauf der durch den Solarkollektor zu erwärmden Flüssigkeit hindurch kommunizierenden Flüssigkeitssäule das Überlaufniveau (4) der Überlaufstrecke (5) um einen vorzugebenden Abstand (15) von 0,5 bis 10 cm über dem Niveau (2) der Flüssigkeitssäule räumlich fest angeordnet ist.

2. Einrichtung nach Anspruch 1, dadurch gekennzeichnet, dass die Überlaufstrecke (5) zu einem auf etwa gleicher Höhe wie der Solarkollektor (7) stehenden Behälter (3) führt, dass das Überlaufniveau (4) der Überlaufstrecke (5) über dem Niveau (2) der im Behälter (3) bzw. in einem im Behälter befindlichen Wärmetauscher (17) stehenden Flüssigkeitssäule liegt und dass die Flüssigkeitssäule mit derjenigen im Solarkollektor (7) durch dessen untere Zuleitung (9) hindurch kommuniziert.

3. Einrichtung nach Anspruch 1, dadurch gekennzeichnet, dass die kommunizierenden Flüssigkeitssäulen Teil eines Kreislaufs bilden, in welchem sich im Bereich der Überlaufstrecke (5) eine Gasblase (16) vorzugebender Grösse befindet.

4. Einrichtung nach Anspruch 3, dadurch gekennzeichnet, dass die Gasblase (16) vom Solarkollektor (7) aus gesehen jenseits der Überlaufstrecke (5) ein bei thermischer Ausdehnung der Flüssigkeit von dieser ganz oder teilweise auszufüllendes Volumen umfasst.

5. Einrichtung nach Anspruch 1, gekennzeichnet durch je einen Luft- und/oder Flüssigkeitszu- bzw. -ablauf oberhalb der Überlaufstrecke im Flüssigkeitskreislauf sowie in dessen unterem Teil.

6. Einrichtung nach Anspruch 1, gekennzeichnet durch Mittel zum Variieren des Niveauunterschieds zwischen Überlaufstrecke (5) und der jenseits des Solarkollektors (7) liegenden Flüssigkeitssäule zwischen 0,5 und 10 cm.

7. Einrichtung nach Anspruch 1, gekennzeichnet durch die Ausbildung des Solarkollektors (7) als Vakuum-Kollektor.

8. Einrichtung nach Anspruch 7, dadurch gekennzeichnet, dass der Vakuum-Kollektor (7) mit Boosterspiegeln eines Konzentrationsfaktors zwischen 1,5 und 4,5 unterlegt ist.

9. Einrichtung nach Anspruch 2, dadurch gekennzeichnet, dass bei indirektem Erhitzen des im Behälter (3) vorhandenen Flüssigkeitsvolumens (1) durch einen Wärmetauscher (17) dessen Wärmetauscherfläche zu 35% oder mehr im oberen Viertel des Behältervolumens untergebracht ist.

## Claims

1. A device for the solar heating of a liquid (1) having a solar collector (7) and flow transfer by natural convection, with an overflow line (5) disposed on the far side of the solar collector (7) in the outlet line of the solar-heated liquid (1), characterized in that when the liquid (1) is at the same initial level in the solar collector (7) and in a column of liquid disposed outside the solar collector and communicating through the inlet of the liquid to be heated by the solar collector, the overflow level (4) of the overflow line (5) is spatially fixed above the level (2) of the column of liquid by a specified distance (15) of between 0.5 and 10 cm.

2. A device according to Claim 1, characterized in that the overflow line (5) leads to a tank (3) disposed at approximately the same level as the solar collector (7), the overflow level (4) of the overflow line (5) is situated above the level (2) of the column of liquid disposed in the tank (3) or in a heat exchanger (17) provided in the tank, and the column of liquid communicates with that in the solar collector (7) by the lower supply line thereof.

3. A device according to Claim 1, characterized in that the communicating columns of liquid form part of a circuit in which is provided a gas pocket (16) of pre-determined size in the region of the overflow line (5).

4. A device according to Claim 3, characterized in that the gas pocket (16), on the far side of the overflow line (5) as viewed from the solar collector (7), comprises a volume to be filled to a greater or lesser extent by the liquid during the thermal expansion of the latter.

5. A device according to Claim 1, characterized in each case by an air and/or liquid supply or outlet line above the overflow line in the liquid circuit and in the lower part thereof.

6. A device according to Claim 1, characterized by means for varying the difference in level between the overflow line (5) and the column of liquid situated on the far side of the solar collector (7) between 0.5 and 10 cm.

7. A device according to Claim 1, characterized in that the solar collector (7) is in the form of a vacuum collector.

8. A device according to Claim 7, characterized in that booster mirrors having a concentration factor of between 1.5 and 4.5 are positioned below the vacuum collector (7).

9. A device according to Claim 2, characterized in that in the case where the volume of liquid (1) present in the tank (3) is indirectly heated by a heat exchanger (17) the heat-exchange surface of the latter is positioned with 35% or over in the upper quarter of the volume of the tank.

## Revendications

1. Dispositif pour chauffer, sous l'action du soleil, un liquide (1), comportant un capteur solaire (7) et un système d'entraînement du liquide par convection naturelle comportant une section de trop-plein (5) située de l'autre côté du capteur solaire (7) dans la dérivation du liquide (1) chauffé par le soleil, caractérisé en ce que, dans le cas d'un même niveau de départ du liquide (1) dans le capteur solaire (7) et dans une colonne de liquide située à l'extérieur du capteur solaire et en communication par l'intermédiaire de l'admission du liquide devant être chauffé par le capteur solaire, le niveau de trop-plein (4) de la section de trop-plein (5) est situé d'une manière fixe dans l'espace à une distance (15), devant être prédéterminée, comprise entre 0,5 et 10 cm au-dessus du niveau (2) de la colonne de liquide.

2. Dispositif selon la revendication 1, caractérisé en ce que la section de trop-plein (5) aboutit à un réservoir (3) situé approximativement à la même hauteur que le capteur solaire (7), en ce que le niveau de trop-plein (4) de la section de trop-plein (5) est situé au-dessus du niveau (2) de la colonne de liquide située dans le réservoir (3) ou dans un échangeur de chaleur (17) situé dans le réservoir, et en ce que la colonne de liquide communique avec celle située dans le capteur solaire (7) au moyen de la conduite inférieure d'amenée (9) de ce dernier.

3. Dispositif selon la revendication 1, caractérisé en ce que les colonnes de liquide communicantes constituent un circuit dans lequel une bulle de gaz (16) d'une taille devant être prédéterminée est située dans la région de la section de trop-plein (15).

4. Dispositif selon la revendication 3, caractérisé en ce que la bulle de gaz (16) entoure le volume devant être rempli en totalité ou en partie par le liquide lors d'une dilatation thermique de ce dernier, lorsque l'on regarde de l'autre côté de la section de trop-plein (5) à partir du capteur solaire (7).

5. Dispositif selon la revendication 1, caractérisé par une arrivée ou un départ d'air et/ou de liquide au-dessus de la section de trop-plein dans le circuit de liquide ainsi que dans la partie inférieure de ce dernier.

6. Dispositif selon la revendication 1, caractérisé par des moyens servant à modifier entre 0,5 et 10 cm la différence de niveau entre la section de trop-plein (5) et la colonne de liquide située de l'autre côté du capteur solaire (7).

7. Dispositif selon la revendication 1, caractérisé par la réalisation du capteur solaire (7) sous la forme d'un capteur à dépression.

8. Dispositif selon la revendication 7, caractérisé en ce qu'au-dessous du capteur à dépression (7) se trouvent disposés des miroirs intensificateurs ayant un facteur de concentration compris entre 1,5 et 4,5.

9. Dispositif selon la revendication 2, caractérisé en ce que, dans le cas d'un chauffage indirect du volume de liquide (1) présent dans le réservoir (3) au moyen d'un échangeur de chaleur (17), la surface d'échange thermique de ce dernier se situe, pour 35% ou plus, dans le quart supérieur du volume du réservoir.

Fig. 1

Fig. 2

Fig. 3